(19) Europäisches Patentamt

European Patent Office

Office européen des brevets

(11) **EP 3 388 336 A1**

## (12) EUROPEAN PATENT APPLICATION

(43) Date of publication:
**17.10.2018 Bulletin 2018/42**

(21) Application number: **18160186.5**

(22) Date of filing: **06.03.2018**

(51) Int Cl.:
**B64C 23/06** $^{(2006.01)}$     **B64C 39/10** $^{(2006.01)}$
**B64C 11/00** $^{(2006.01)}$

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.04.2017 US 201762485338 P
22.12.2017 US 201715853045
10.01.2018 PCT/US2018/013052**

(72) Inventors:
• **LIU, Zhang**
  **Menlo Park, CA California 94025 (US)**
• **TALMOR, Amnon G.**
  **Menlo Park, CA California 94025 (US)**
• **CAO, Yusong**
  **Menlo Park, CA California 94025 (US)**

(74) Representative: **Schröer, Gernot H.
Meissner Bolte Patentanwälte
Rechtsanwälte Partnerschaft mbB
Bankgasse 3
90402 Nürnberg (DE)**

(71) Applicant: **Facebook, Inc.
Menlo Park, CA 94025 (US)**

## (54) WING AND PROPELLER DESIGN FOR AIRCRAFT

(57) A wing and propeller design may reduce the power required to propel an aircraft (400) in flight. This may be achieved by reducing downwash and trailing vortices that occur naturally on the aircraft's wings. A reduction in downwash and trailing vortices may in turn reduce the overall drag on the aircraft. In one embodiment, an aircraft includes a number of propellers (410, 420, ..., 450, 460) $N_{prop}$, wherein each propeller comprises a diameter $d_{prop}$, has a propeller efficiency $\eta_{prop}$, and is configured to absorb power $p_{prop}$ to rotate at a rate $RPM$ to generate thrust for a flight speed $V$ of the aircraft. The aircraft may further include a total power $p_{total}$ absorbed by the propellers that is approximately $p_{prop} \times N_{prop}$, a wing having a circulation distribution, wherein the wing comprises a wingspan $B$, a drag $D$ that is approximately equal to $p_{total} \times \eta_{prop} /V$. For $V$ and $B$, the circulation distribution, $d_{prop}$, and $RPM$ substantially minimizes $D$.

*FIG. 4*

EP 3 388 336 A1

# Description

## TECHNICAL FIELD

This disclosure generally relates to reducing drag on an aircraft.

## BACKGROUND

An aircraft generates lift by reducing the air pressure on top of its wings and increasing the air pressure underneath its wings as it travels through the air. The difference in air pressure allows the aircraft to fly. An aircraft in flight typically has wings that hit the air at an angle of attack. An angled wing also generates lift by pushing down on the air directly beneath it. This creates a downward rush of air directly behind the aircraft. This downward rush of air is called "downwash" and it is left behind an aircraft as it travels through the air. As air is pushed down by the aircraft's wings, one or more trailing vortices or wing-trailing vortices may be generated. Trailing vortices are circular patterns of rotating air left behind the wing as it generates lift.

## SUMMARY OF PARTICULAR EMBODIMENTS

In particular embodiments, a wing and propeller design may reduce the power required to propel an aircraft in flight. This may be achieved by reducing downwash and trailing vortices that occur naturally on the aircraft's wings. A reduction in downwash and trailing vortices may in turn reduce the overall drag on the aircraft. Reduction in drag may be accomplished by an aircraft that comprises a number of propellers $N_{prop}$, wherein each propeller comprises a diameter $d_{prop}$, has a propeller efficiency $\eta_{prop}$, and is configured to absorb power $p_{prop}$ to rotate at a rate $RPM$ to generate thrust for a flight speed $V$ of the aircraft. A total power $p_{total}$ absorbed by the propellers may be approximately $p_{prop} \times N_{prop}$. The aircraft may also include a wing having a circulation distribution, wherein the wing comprises a wingspan $B$. The drag $D$ on the aircraft may be approximately equal to $p_{total} \times \eta_{prop}/V$. Finally, for $V$ and $B$, the circulation distribution, $d_{prop}$, and $RPM$ substantially minimizes $D$.

In particular embodiments, an aircraft may comprise a horizontal wing having a wingspan $B$. When the aircraft is in flight, the horizontal wing may produce a trailing vortex with a first induced velocity in a first direction. This trailing vortex may be a circular pattern of rotating air left behind the wing as it generates lift. The aircraft may produce one or more of these trailing vortices. The trailing vortices may cause downwash which in turn may cause drag on the wing. To counter this effect, the aircraft may include a plurality of propellers that, when generating thrust, produce a propeller wake vortex with a second induced velocity in a second direction, wherein the propeller wake vortex cancels out at least some of the wing trailing vortex.

In an embodiment $p_{total}$ is less than 1450 watts.
In an embodiment the aircraft, when in flight at an altitude above 40,000 feet, maintains a flight speed $V$ of 25 meters per second.
In an embodiment the aircraft, when in flight at an altitude above 40,000 feet, follows a particular path pattern that is one of a circular path, an elliptical path, or a straight line path.
In an embodiment the wingspan $B$ is between 30 and 60 meters.
In an embodiment the horizontal wing as an aspect ratio of at least 10.
In an embodiment the wing circulation distribution follows a parabolic curve.
In an embodiment the horizontal wing produces, when the aircraft is in flight, a wing trailing vortex with a first induced velocity in a first direction; and
at least some of the propellers, when generating thrust, produce a propeller wake vortex with a second induced velocity in a second direction, wherein the propeller wake vortex cancels out at least some of the wing trailing vortex.
In an embodiment the propellers rotate at an RPM of at least 500.
In an embodiment the propellers are affixed to the horizontal wing.
In an embodiment $N_{prop}$ is 6.
In an embodiment $d_{prop}$ is 1.5 meters.
In an embodiment each propeller comprises a hub and each hub has a hub diameter $d_{hub}$, wherein $d_{hub}/d_{prop} = 0.2$.
In an embodiment thrust is evenly distributed among the propellers.
The embodiments disclosed herein are only examples, and the scope of this disclosure is not limited to them. Particular embodiments may include all, some, or none of the components, elements, features, functions, operations, or steps of the embodiments disclosed above. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

**BRIEF DESCRIPTION OF THE DRAWINGS**

FIG. 1A illustrates example trailing vortices produced by an example wing of an example aircraft.

FIG. 1B illustrates more detail related to example trailing vortices produced by an example wing of an example aircraft.

FIG. 2 illustrates an example propeller wake vortex produced by an example propeller of an example aircraft.

FIG. 3 illustrates example induced velocities produced by an example wing and example propellers.

FIG. 4 illustrates an example aircraft.

FIG. 5A illustrates an example normalized section profile of an example wing cross section profile.

FIG. 5B illustrates an example lift coefficient as a function of the angle of attack $C_L = f_L(\alpha)$ for a given section of an example wing.

FIG. 5C illustrates drag coefficient as a function of the lift coefficient $C_D = f_D(C_L)$ for a given section of an example wing.

FIG. 6A illustrates example parabolic circulation distributions for an example wing.

FIG. 6B illustrates example linear circulation distributions for an example wing.

FIG. 7A illustrates an example wing section pitch angle for $B = 60m$ and $V = 25$ $m/s$.

FIG. 7B illustrates an example wing section chord length for $B = 60m$ and $V = 25$ $m/s$.

FIG. 7C illustrates an example circulation along an example wing span for $B = 60m$ and $V = 25$ $m/s$.

FIG. 7D illustrates an example induced velocity for an example aircraft for $B = 60m$ and $V = 25$ $m/s$.

FIG. 7E illustrates an example propeller blade pitch angle for $B = 60m$ and $V = 25$ $m/s$.

FIG. 8 illustrates an example computer system.

**DESCRIPTION OF EXAMPLE EMBODIMENTS**

When a plane flies, its wings create a "wingtip vortex" also referred to as a "trailing vortex." Trailing vortices are circular patterns of rotating air left behind a wing as it generates lift. Trailing vortices cause induced drag and also reduce the effectiveness of the wing to generate lift. These vortices can occur at other places on the wing besides just the wing tip. Trailing vortices are associated with induced drag and downwash. Induced drag is an aerodynamic drag force that occurs whenever a moving object redirects the airflow coming at it. This drag force occurs in airplanes due to wings or a lifting body redirecting air to cause lift. When producing lift, air below the wing is generally at a higher pressure than the air above the wing, while air above the wing is generally at a lower than atmospheric pressure. On a wing of finite span, this pressure difference causes air to flow from the lower surface wing root, around the wingtip, towards the upper surface wing root. This spanwise flowing air combines with chordwise flowing air, causing a change in speed and direction, which twists the airflow and produces vortices along the wing trailing edge. Downwash is the air that is deflected when it flows around an airfoil.

In particular embodiments, a wing and propeller design may reduce the power required to propel an aircraft in flight. This may be achieved by reducing downwash and trailing vortices that occur naturally on the aircraft's wings. A reduction in downwash and trailing vortices may in turn reduce the overall drag on the aircraft. Reduction in drag may be accomplished by an aircraft that comprises a number of propellers a number of propellers $N_{prop}$, wherein each propeller comprises a diameter $d_{prop}$, has a propeller efficiency $\eta_{prop}$, and is configured to absorb power $p_{prop}$ to rotate at a rate $RPM$ to generate thrust for a flight speed $V$ of the aircraft. A total power $p_{total}$ absorbed by the propellers may be approximately $p_{prop} \times N_{prop}$. The aircraft may also include a wing having a circulation distribution, wherein the wing comprises a wingspan $B$. The drag $D$ on the aircraft may be approximately equal to $p_{total} \times \eta_{prop}/V$. Finally, for $V$ and $B$, the circulation distribution, $d_{prop}$, and $RPM$ substantially minimizes $D$.

In particular embodiments, an aircraft may comprise a horizontal wing having a wingspan $B$. When the aircraft is in flight, the horizontal wing may produce a trailing vortex with a first induced velocity in a first direction. This trailing vortex may be a circular pattern of rotating air left behind the wing as it generates lift. The aircraft may produce one or more of these trailing vortices. The trailing vortices may cause downwash which in turn may cause drag on the wing. To counter this effect, the aircraft may include a plurality of propellers that, when generating thrust, produce a propeller wake vortex with a second induced velocity in a second direction, wherein the propeller wake vortex cancels out at least some of the wing trailing vortex. This second induced velocity may be understood to cause *upwash* on the wing. The upwash may counter the downwash and may thus reduce the overall drag on the wing. Such a design may result in a fixed-wing aircraft propelled by propellers that would fly at a specified speed and provide a specified lift to support a specified weight including the weight of the craft and the load it carries while maintaining power efficiency.

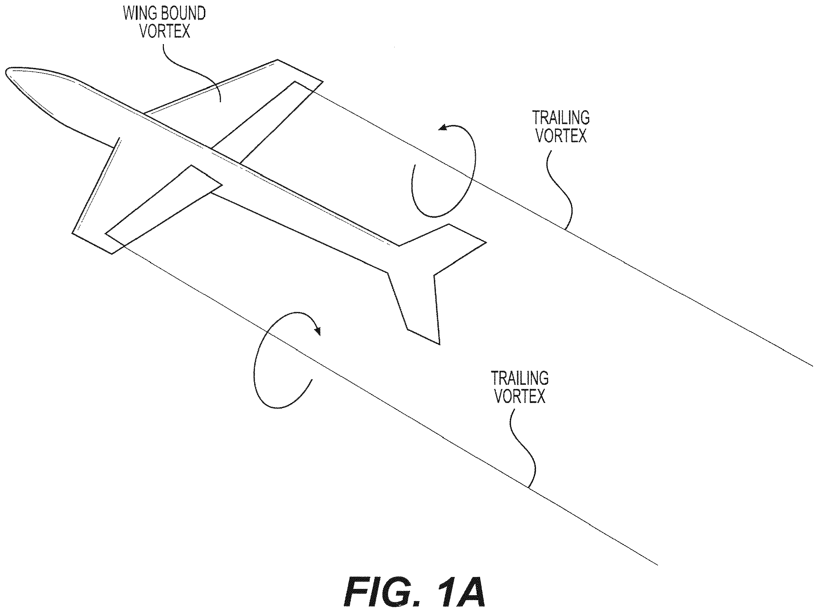

**FIG. 1A** illustrates example trailing vortices produced by an example wing of an example aircraft. A wing may produce one or more trailing vortices as it travels through the air. These trailing vortices may be located at the wing tips or at any other point along a wing or other component of an aircraft. A trailing vortex may be a circular pattern of rotating air left behind the wing as it generates lift. If viewed from the tail of the plane, a trailing vortex on the left wing may rotate in a clockwise direction, and a trailing vortex on the right wing may rotate in a counter-clockwise direction. These two types of vortices, working together, may generate a region of downwash behind the aircraft. Trailing vortices may be associated with induced drag and downwash, which reduce the efficiency of an aircraft in flight and thus cause more power to be consumed than if no induced drag or downwash were present. Induced drag may be a force that occurs whenever a moving object redirects the airflow coming at it. Its direction may be substantially opposite the direction of the moving object.

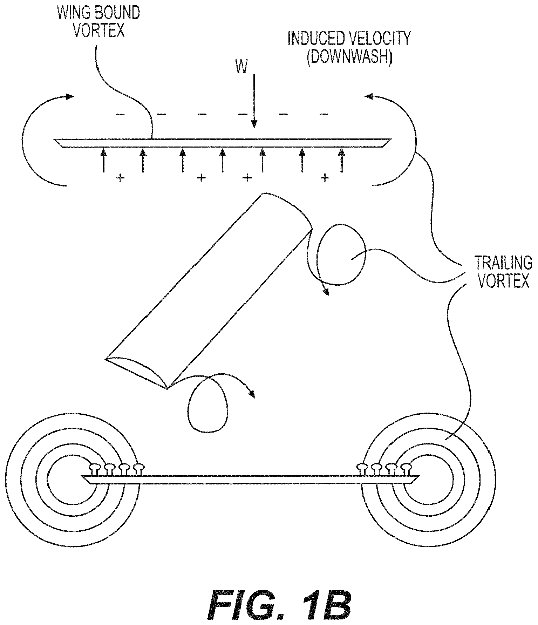

**FIG. 1B** illustrates more detail related to example trailing vortices produced by an example wing of an example aircraft. As can be seen by the wings illustrated in FIG. 1B, as the wings travel through the air when in flight, the wings may produce one or more trailing vortices. These vortices may contribute to an induced velocity $w$ or downwash on the wing. Induced velocity $w$ may be a consequence of the wing trailing vortices. Induced velocity $w$ may be in a direction substantially opposite to the lifting force that the wing produces as it travels through the air. Associated with induced velocity $w$ may be induced drag $D$. Induced drag $D$ may be a force that occurs whenever a moving object redirects the airflow coming at it. Its direction may be substantially opposite the direction of the moving object. Because trailing vortices contribute to induced velocity $w$, which in turn is associated with induced drag $D$, it follows that reducing or eliminating some or all of the trailing vortices on the wing may reduce the induced drag $D$ on the wing, and thus decrease the power required to fly the aircraft. One way to reduce the trailing vortices may be to create a counter force to combat the trailing vortex. Because a trailing vortex is a circular pattern of rotating air in a particular direction, creating a circular pattern of rotating air in a direction that is opposite to the wing trailing vortex may cancel or reduce at least some of the wing trailing vortex. As a consequence the induced velocity $w$ and the induced drag $D$ may also be reduced. To create a circular pattern of rotating air in a direction that is opposite to the wing trailing vortex, particular embodiments may provide one or more propellers that rotate in a direction necessary to produce one or more such circular patterns of rotating air. Although this disclosure describes providing propellers in a particular manner, this disclosure contemplates providing propellers in any suitable manner.

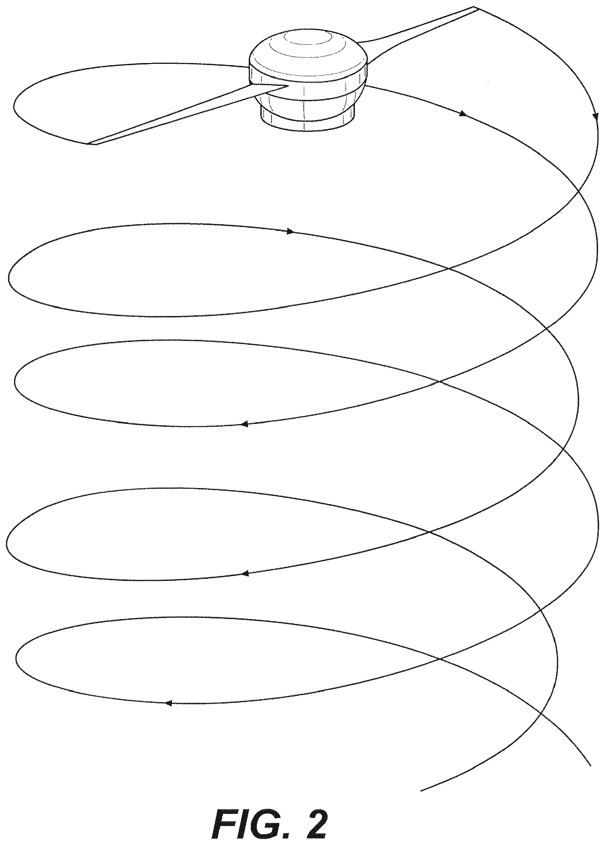

**FIG. 2** illustrates an example propeller wake vortex produced by an example propeller of an example aircraft. If viewing the propeller from the front, the propeller may rotate in a clockwise direction, and may produce a propeller wake vortex that also rotates in a clockwise direction. If placed on an aircraft's left wing, a propeller rotating in a clockwise direction may reduce or cancel the wing trailing vortex produced when the left wing travels through the air. This may be because the aircraft's left wing produces a wing trailing vortex that rotates in a counter-clockwise direction when viewing the wing from the front. Likewise, on the opposite wing, the right wing, a propeller rotating in a counter-clockwise direction may reduce or cancel the wing trailing vortex produced when the right wing travels through the air. This may be because the aircraft's right wing produces a wing trailing vortex that rotates in a clockwise direction when viewing the wing from the front. Although this disclosure describes generating a propeller wake vortex in a particular manner, this disclosure contemplates generating a propeller wake vortex in any suitable manner.

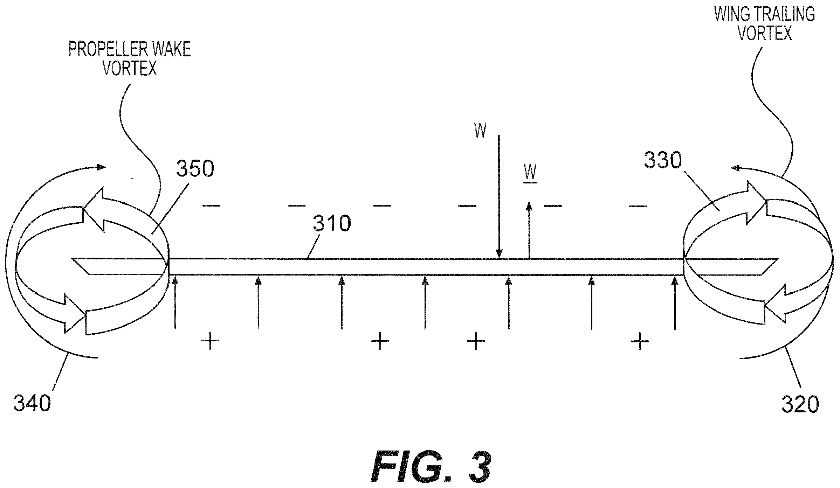

**FIG. 3** illustrates example induced velocities produced by an example wing 310 and example propellers (not shown). In particular embodiments, a horizontal wing 310 produces, when the aircraft is in flight, wing trailing vortices 320 and 340 with a first induced velocity $w$ in a first direction. The direction of w in the illustration of FIG. 3 is substantially downward, opposite the direction of the lifting force produced when the wing is in flight. Wing 310 may have one or more propellers affixed to it. In this example, two propellers may be affixed to wing 310, one near either tip. In this example, the propellers are not shown, but their propeller wake vortices 330 and 350 are shown. The propellers, when rotating, may generate propeller wake vortices 330 and 350 that rotate in a direction opposite to the rotation of the wing trailing vortices 320 and 340. Propeller wake vortices 330 and 350 may cancel out at least some of the wing trailing vortex. In particular embodiments, this cancellation may result in a reduction in the first induced velocity $w$ because of a second induced velocity $\underline{w}$ that is in an opposite direction to the first induced velocity $w$. In this example, the second induced velocity $\underline{w}$ may be substantially upward. Because the first induced velocity $w$ has been reduced, the induced drag $D$ may also be reduced. Because there is less drag on the aircraft, the aircraft may require less total power $p_{total}$ when in flight than it would require without the cancellation effect described above. In particular embodiments, the propellers on the right side of the aircraft may need to rotate in the opposite direction of the propellers on the left side of the aircraft. Even though the propellers spin in opposite directions, they may nonetheless generate thrust in the same direction. This may be accomplished by designing propellers on one side of the aircraft to have the opposite propeller blade pitch $\theta_{prop}$ as the propellers on the other side of the aircraft. Although this disclosure describes generating a propeller wake vortex in a particular manner, this disclosure contemplates generating a propeller wake vortex in any suitable manner.

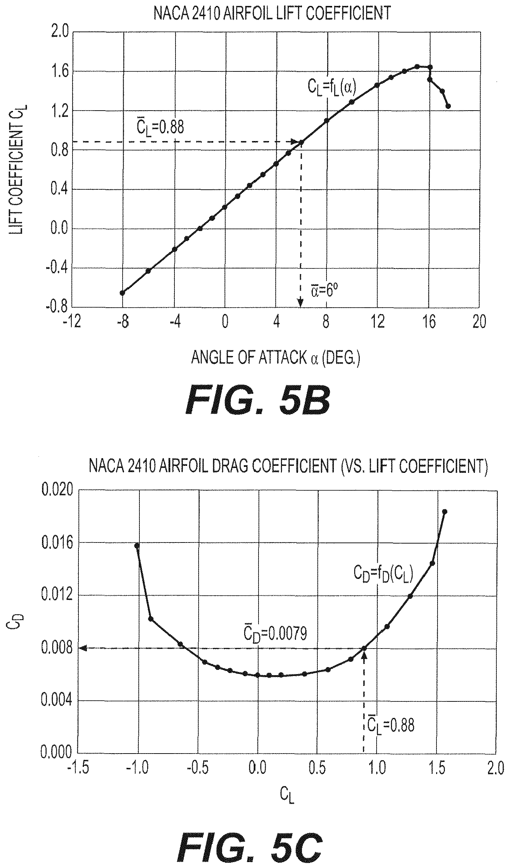

In particular embodiments, a total power $p_{total}$ absorbed by the propellers is approximately $p_{prop} \times N_{prop}$. In particular embodiments the total thrust to overcome any wing drag may be evenly distributed among the propellers, the magnitude of the propeller blade pitch $\theta_{prop}$ for each propeller may be the same, and the propellers may rotate at the same RPM. The propeller RPM may be sufficiently high that the unsteady effect of the flow induced by the propellers in the flow field outside their wakes downstream may be negligible. In particular embodiments, the aircraft may have a wing having a circulation distribution, wherein the wing comprises a wingspan $B$. In particular embodiments, when the aircraft is in flight, the aircraft may experience a drag $D$ that is approximately equal to $p_{total} \times \eta_{prop}/V$. At least part of the this drag $D$ may be induced drag caused by downwash, which in turn may be caused by one or more wing trailing vortices. The propellers may rotate in such a direction that their wakes cause *upwash* on the wing. This may reduce the downwash due to the wing's wake, and thus may reduce the induced drag of the wing. For a given section of the wing, the section's lift coefficient as a function of the angle of attack $C_L = f_L(\alpha)$ and the section's drag coefficient as a function of the lift coefficient $C_D = f_D(C_L)$ are shown in **FIGS. 5B** and **5C.**

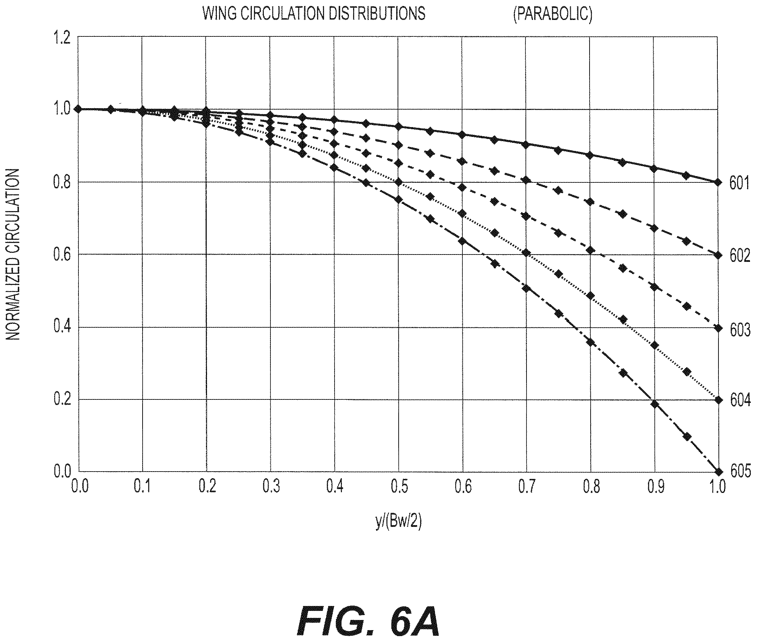

In particular embodiments, for a given $V$ and a given $B$, the circulation distribution, $d_{prop}$, and *RPM* substantially minimizes $D.$ In particular embodiments, the combination of parameters that substantially minimizes $D$ may be $B = 60$m, $V = 25$ *m/s*, wing circulation distribution 602 (as shown in FIG. 6A), $d_{prop} = 1.5$m, and *RPM* $= 500$. In particular embodiment, when $D$ is reduced using the above parameters, the total power $p_{total}$ required to fly the aircraft may be less than 1450 watts. In particular embodiment, additional constraints may be applied, such as constraints on the wing span, flight speed, flight altitude, etc. If additional constraints are applied, the total power $p_{total}$ required to fly the aircraft may increase. As an example and not by way of limitation, if a constraint on the wingspan $B$ is applied such that $B \leq 40$, the total power $p_{total}$ required to fly the aircraft may be less than 2200 watts. Although this disclosure describes a particular combination of parameters applied to an aircraft in a particular manner, this disclosure contemplates any suitable combination of parameters applied to an aircraft in any suitable manner.

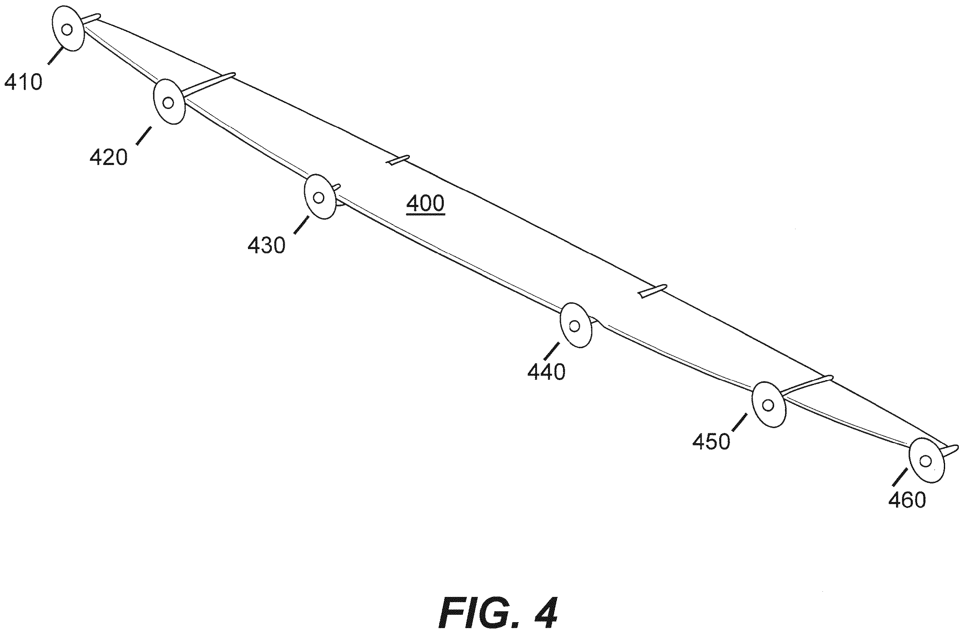

**FIG. 4** illustrates an example aircraft 400. To reduce drag and thus reduce the amount of power required to propel an aircraft, in particular embodiments, an aircraft may comprise a number of components with particular dimensions arranged in a particular arrangement. A number of propellers 410-460 $N_{prop}$ may be provided. Each propeller 410-460 may have a diameter $d_{prop}$, a hub diameter $d_{hub}$, a propeller blade pitch $\theta_{prop}$, a propeller chord length $C_{prop}$ and a propeller efficiency $\eta_{prop}$. The propeller efficiency may be used to calculate a total power $p_{total}$ required to fly the aircraft. Each propeller may be configured to absorb power $p_{prop}$. This may allow the propeller to rotate at a rate *RPM* to generate thrust for a flight speed $V$ of the aircraft. When rotating at a rate *RPM,* the propeller may have a tangential velocity. The tangential velocity may be used to derive the strength of the circulation of the propeller wake vortex.

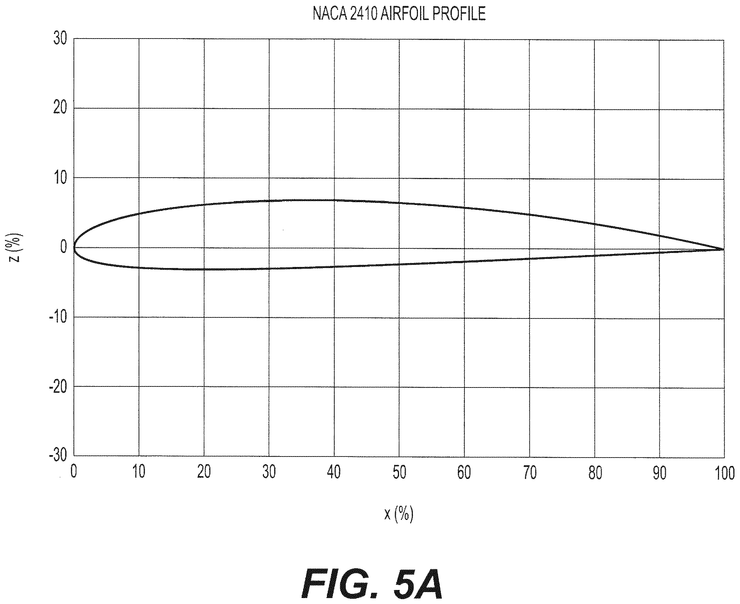

Once the circulation strength is determined, the induced velocities at the wing sections close to the propeller wake vortices may be calculated. The strength of the shed wake vortex system along the wing span may be derived based on the conservation of the circulation of the vortex system, $\mu(y) = -\dfrac{\partial \Gamma(y)}{\partial}.$ As an example and not by way of limitation an aircraft may be designed with the following design parameters: required lift: $T = 4,000$ *N;* altitude of flight: H = 60,000 ft; flight speed: $V = 25$ m/s; wing span: $B = 40$ m; wing cross section profile: NACA 2410 (Lift coefficient $\overline{C}_L = .88$ is selected for the design, angle of attack $\overline{\alpha} = 6°$ and drag coefficient $\overline{C}_D = .0079$). The normalized section profile of such a wing cross section profile is shown in **FIG. 5A.** The section's lift coefficient as a function of the angle of attack and the section's drag coefficient as a function of the lift coefficient are shown in **FIGS. 5B** and **5C,** respectively. In particular embodiments, when the aircraft is flying above a threshold altitude (e.g., 40,000 feet), the aircraft may maintain a flight speed of 25 m/s. In particular embodiments, flight speed may mean wind speed and not absolute ground speed. As an example and not by way of limitation, if the aircraft is flying into a 10 m/s headwind, to maintain a wind speed of 25 m/s, the absolute ground speed of the aircraft may be 15 m/s. As another example and not by way of limitation, if the aircraft is flying with a 10 m/s tailwind, to maintain a wind speed of 25 m/s, the absolute ground speed of the aircraft may be 35 m/s. The example aircraft may further include the following design parameters: a circulation distribution form of the wing section at the wing tip $\Upsilon_{tip} = 0.6$, and a circulation distribution form of the wing section along the wing span *y:*

$$\Upsilon(y) = 1.0 + (\Upsilon_{tip} - 1)\left(\frac{2y}{B}\right)^2,$$

where $y$ is the position along with wing span. The example aircraft may further include 6 propellers with 2 blades each, with $d_{prop} = 1.5$ m, $d_{hub} = 0.3$ m. The propellers may be located along the wingspan in the following locations:

$$y_{prop1} = \pm 0.3\left(\frac{B}{2}\right) \text{ (for propellers 430 and 440),}$$

$$y_{prop2} = \pm 0.7\left(\frac{B}{2}\right) \text{ (for propellers 420 and 450)}$$

and $$y_{prop3} = \pm 1.0\left(\frac{B}{2}\right) \text{ (for propellers 410 and 460).}$$ As an example and not by way of limitation, a propeller efficiency for the above design may be $\eta_{prop} = 0.835$. Although this disclosure describes combining particular parameters in a particular manner, this disclosure contemplates combining any suitable parameters in any suitable manner.

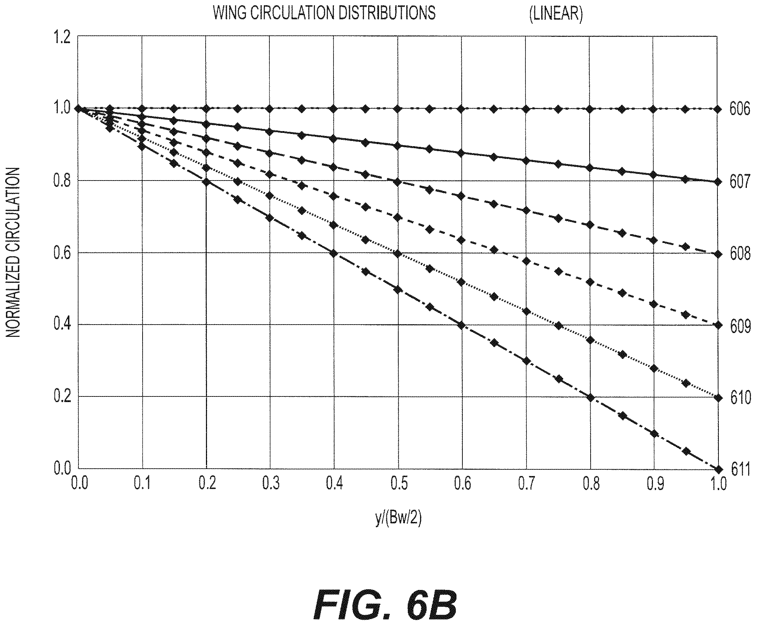

In particular embodiments, several parameters associated with the aircraft 400 may be varied. As examples and not by way of limitation, the flight speed $V$ may be $V$ = (15,20,25, 30)m/s; the wing span $B$ may be $B$ = (30, 40, 50,60)m; the propeller diameter $d_{prop}$ may be 1.0 m or 1.5 m, with $d_{hub}/d_{prop}$ = 0.2; an RPM between 800 and 2400 rotations per minute; and any one of several different wing circulation distributions $\Upsilon(y)$. **FIG. 6A** illustrates five example parabolic circulation distributions 601-605. **FIG. 6B** illustrates 6 linear circulation distributions 606 - 611. In particular embodiments, one or more design parameters may be fixed. As an example and not by way of limitation, fixed parameters may include: required lift (e.g., 4,000 N); required altitude (e.g., 60,000 ft.); the wing cross-section profile (e.g., NACA 2410); the number of propellers $n_{prop}$ (e.g., 6 propellers); the number of blades on the propellers (e.g., 2 blades per propeller); the locations of propellers along the wing span (e.g., see propeller positions in previous paragraph); and the thrust allocation among the propellers (e.g., even allocation where every propeller has the same pitch angle and rotates with the same *RPM*). Although this disclosure describes varying particular parameters in a particular manner, this disclosure contemplates varying any suitable parameters in any suitable manner.

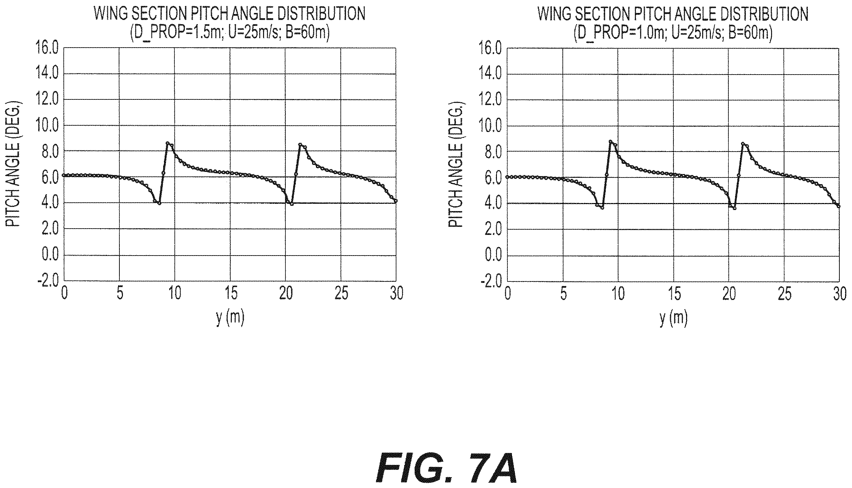

**FIG. 7A** illustrates an example wing section pitch angle for $B$ = 60$m$ and $V$ = 25 *m/s.* The plot on the left represents the pitch angle for a design with $d_{prop}$ = 1.5 $m$. The plot on the right represents the pitch angle for a design with $d_{prop}$ = 1.0 $m$. The horizontal axis represents the location $y$ along the wing of an aircraft (e.g., aircraft 400). Although this disclosure describes particular pitch angles for particular locations along a wing, this disclosure contemplates any suitable pitch angles for any suitable location along a wing.

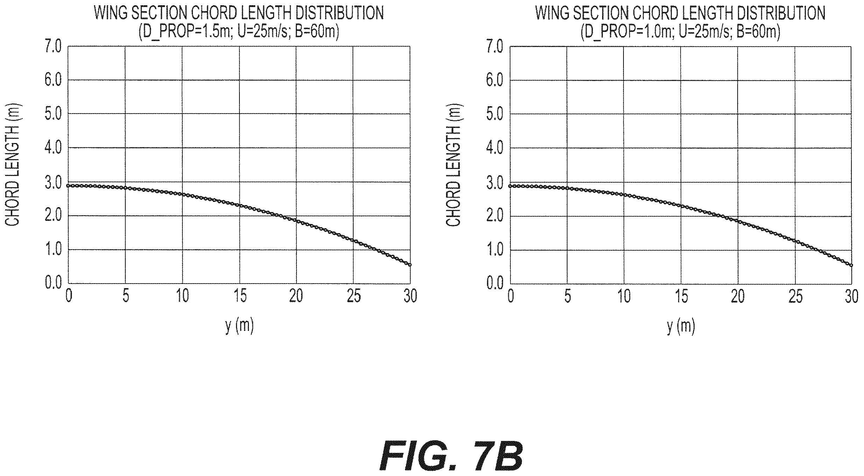

**FIG. 7B** illustrates an example wing section chord length for $B$ = 60m and $V$ = 25 $m/s$. The plot on the left represents the cord length for a design with $d_{prop}$ = 1.5 $m$. The plot on the right represents the chord length for a design with $d_{prop}$ = 1.0 $m$. The horizontal axis represents the location $y$ along the wing of an aircraft (e.g., aircraft 400). Although this disclosure describes particular chord lengths for particular locations along a wing, this disclosure contemplates any suitable chord length for any suitable location along a wing.

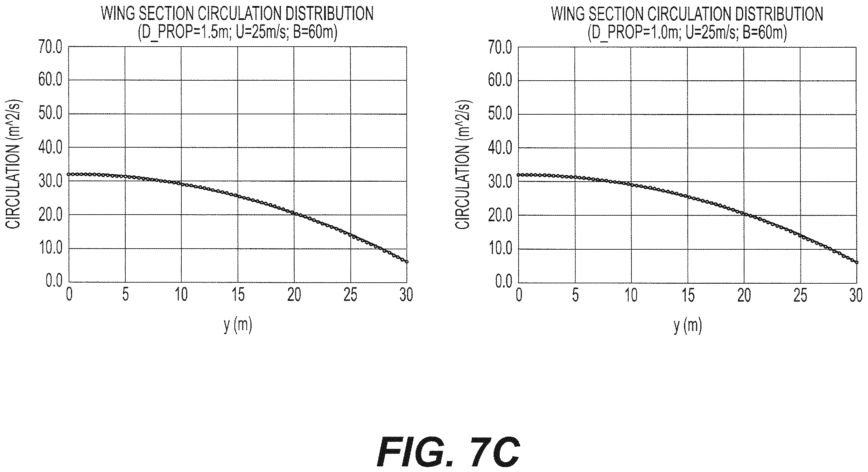

**FIG. 7C** illustrates an example circulation along an example wing span for $B$ = 60m and $V$ = 25 *m/s*. The plot on the left represents the circulation for a design with $d_{prop}$ = 1.5 $m$. The plot on the right represents the circulation for a design with $d_{prop}$ = 1.0 $m$. The horizontal axis represents the location $y$ along the wing of an aircraft (e.g., aircraft 400). Although this disclosure describes particular circulation distributions for particular locations along a wing, this disclosure contemplates any suitable circulation distributions for any suitable location along a wing.

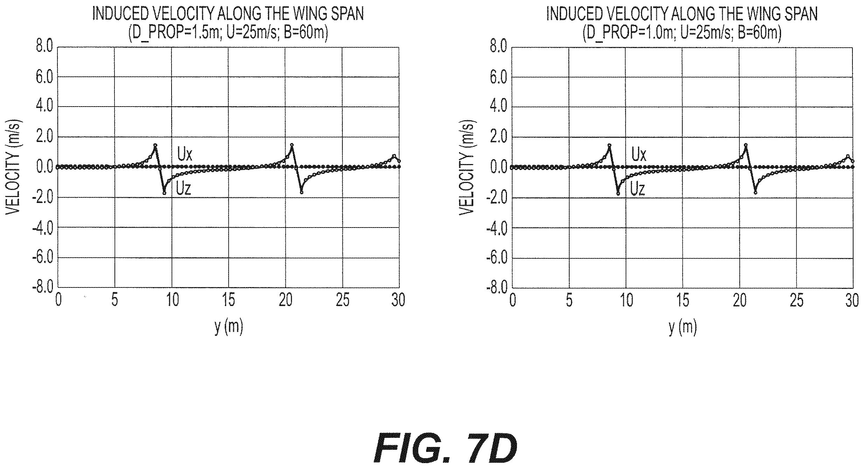

**FIG. 7D** illustrates an example induced velocity along an example aircraft for $B$ = 60m and $V$ = 25 *m/s.* The plot on the left represents the induced velocity for a design with $d_{prop}$ = 1.5 m. The plot on the right represents the induced velocity for a design with $d_{prop}$ = 1.0 m. The horizontal axis represents the location $y$ along the wing of an aircraft (e.g., aircraft 400). The parameters $u_x$ and $u_z$ may be the components of the induced velocity due to the vortex systems shed from the wing and the propellers. In particular embodiments, the contributions to the vertical induced velocity component by the wing and the propellers may also be taken into consideration. The propeller wakes may have a significant effect on the induced velocity on the wing and thus the design of the wing section pitch angle and the cord length. Although this disclosure describes particular circulation distributions for particular locations along a wing, this disclosure contemplates any suitable circulation distributions for any suitable location along a wing.

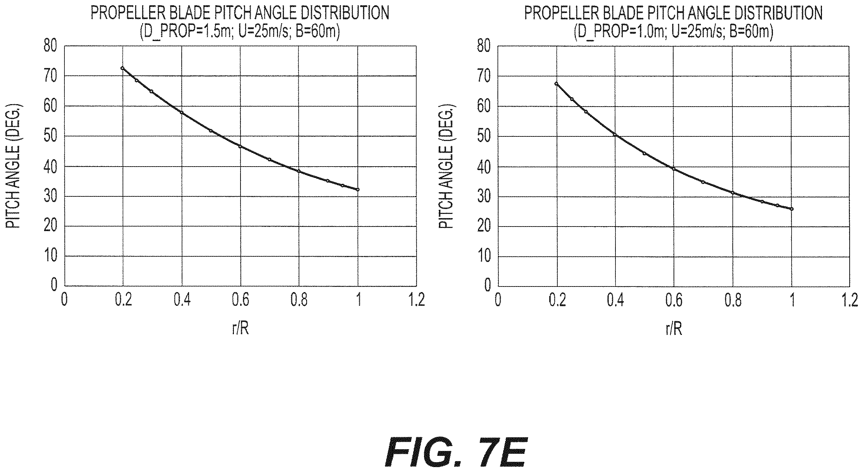

**FIG. 7E** illustrates an example propeller blade pitch angle for $B$ = 60m and $V$ = 25 *m/s.* The horizontal axis may be the non-dimensional radius of the blade section r normalized by the propeller radius $R$, *where R* = $d_{prop}$/2. Using the propeller blade pitch angles as illustrated in FIG. 7E, the propellers' wake vortices may cancel at least some of the downwash effect on the wing, thus reducing the wing resistance. Although this disclosure describes particular propeller blade pitch angles at particular locations r along a propeller, this disclosure contemplates any suitable propeller blade pitch angles at any suitable location r along a propeller.

In particular embodiments, the wing span $B$ may have a significant effect on the design of the wing and propeller. In particular embodiments, particular combinations of particular parameters may lead to greater or lower power consumption by the aircraft while in flight. As an example and not by way of limitation, the total power required to fly an aircraft with varying wingspans B at varying flight speeds $V$ may be summarized in the following table:

**Table 1: Power Values for Different Combinations of *V* and *B***

|  | $V$ (m/s) | $V$ (m/s) | $V$ (m/s) | $V$ (m/s) |
|---|---|---|---|---|
| $B$ (m) | 15 m/s | 20 m/s | 25 m/s | 30 m/s |
| 30 m | 6355 W | 4232 W | 3320 W | 3062 W |
| 40 m | 3291 W | 2533 W | 2214 W | 2116 W |
| 50 m | 2280 W | 1799 W | 1695 W | 1687 W |
| 60 m | 1667 W | 1441 W | 1417 W | 1445 W |

As shown in Table 1, the combination of *V* and *B* that leads to the lowest power consumption is *V* = 25 *m/s* and *B* = 60 m. For *V* and *B* values in the Table 1, the following design parameters may be set: wing circulation may be set at distribution number 2, propeller diameter may be 1.5 m, and propeller RPM may be 500. With *V* = 25 *m/s* and *B* = 60 m, this may lead to a total power consumption of 1417 watts. Power consumption values may be measured for other combinations of parameters, including, e.g., wing distribution number versus wingspan; propeller RPM versus wingspan; flight speed and wing distribution; or any other suitable combination. Although this disclosure describes measuring power consumption in a particular manner, this disclosure contemplates measuring power consumption in any suitable manner.

In particular embodiments, when the aircraft is flying at an altitude above 40,000 feet, it may be at "cruising altitude." Cruising altitude may be between 40,000 feet and 70,000 feet. When the aircraft is in flight above 40,000 feet, it may follow a circular path, an elliptical path, or a straight line path. For actual operation of the aircraft, the aircraft may fly within a vicinity of a target reference point fixed on the ground; the aircraft may play as near as practicable to the reference point. During operation, the aircraft may need to make turns to keep its flight within a specified range of the reference point. Because of this, the flight speed may change. This may mean the aircraft may fly at a speed different from the design flight speed (e.g., $V = 25$ $m/s$) for a portion of the total flight time. The energy efficiency may be reduced (and thus the required total power may increase) with the aircraft is flying at an off-design speed. Selection of the flight path and the flight speed may affect the total energy consumption by the aircraft. If the aircraft is flying in a circular path, the aircraft may fly in a circle about the reference point. The distance of the craft to the reference point may remain constant (or substantially constant). This may enable the aircraft to fly at the design speed (e.g., $V = 25$ $m/s$) with high energy efficiency (e.g., less than 1450 watts). Furthermore, the flight radius may be sufficiently large so that it may be assumed that the aircraft may be flying along a straight line. In particular embodiments, the aircraft may follow an elliptical, rather than circular, pattern. An elliptical pattern may be desirable in windy conditions. In particular embodiments, the aircraft may follow a substantially straight-line path, only turning at the end of the designated line segment, and then tracing the same path it just flew, so as to remain relatively close to the reference point. In particular embodiments, the energy efficiency and the total energy consumption of the aircraft may depend on weather conditions and selection of the flight path patterns. Variation in wind speed may result in reduction in the energy efficiency of the aircraft.

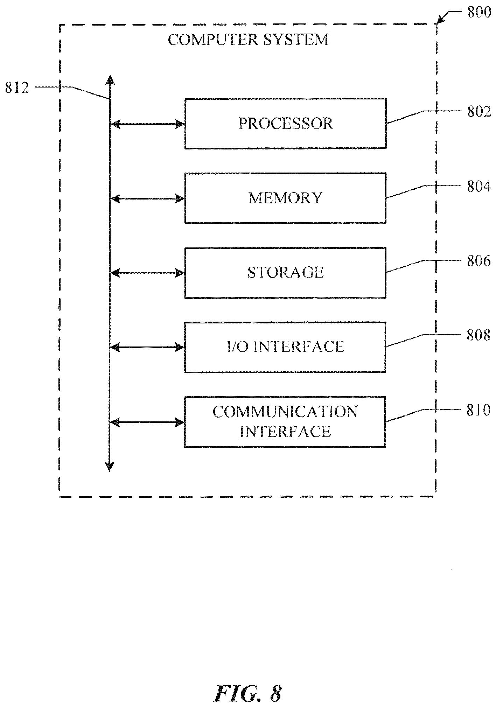

In particular embodiments, a control system may be installed on the aircraft, which may be configured to change the wing's pitch angle (e.g., angle of attack) in real time in order to adapt to the change of the wind conditions. As an example and not by way of limitation, the control system may use some or all of the components and systems illustrated and described by FIG. 8 and the accompanying discussion. Although this disclosure describes providing a control system in a particular manner, this disclosure contemplates providing a control system in any suitable manner.

**FIG. 8** illustrates an example computer system 800. In particular embodiments, one or more computer systems 800 perform one or more steps of one or more methods described or illustrated herein. In particular embodiments, one or more computer systems 800 provide functionality described or illustrated herein. In particular embodiments, software running on one or more computer systems 800 performs one or more steps of one or more methods described or illustrated herein or provides functionality described or illustrated herein. Particular embodiments include one or more portions of one or more computer systems 800. Herein, reference to a computer system may encompass a computing device, and vice versa, where appropriate. Moreover, reference to a computer system may encompass one or more computer systems, where appropriate.

This disclosure contemplates any suitable number of computer systems 800. This disclosure contemplates computer system 800 taking any suitable physical form. As example and not by way of limitation, computer system 800 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 800 may include one or more computer systems 800; be unitary or distributed; span multiple locations; span multiple machines; span multiple data centers; or reside in a cloud, which may include one or more cloud components in one or more networks. Where appropriate, one or more computer systems 800 may perform without substantial spatial or temporal limitation one or more steps of one or more methods described or illustrated herein. As an example and not by way of limitation, one or more computer systems 800 may perform in real time or in batch mode one or more steps of one or more methods described or illustrated herein. One or more computer systems 800 may perform at different times or at different locations one or more steps of one or more methods described or illustrated herein, where appropriate.

In particular embodiments, computer system 800 includes a processor 802, memory 804, storage 806, an input/output (I/O) interface 808, a communication interface 810, and a bus 812. Although this disclosure describes and illustrates a particular computer system having a particular number of particular components in a particular arrangement, this disclosure contemplates any suitable computer system having any suitable number of any suitable components in any suitable arrangement.

In particular embodiments, processor 802 includes hardware for executing instructions, such as those making up a computer program. As an example and not by way of limitation, to execute instructions, processor 802 may retrieve (or fetch) the instructions from an internal register, an internal cache, memory 804, or storage 806; decode and execute them; and then write one or more results to an internal register, an internal cache, memory 804, or storage 806. In particular embodiments, processor 802 may include one or more internal caches for data, instructions, or addresses. This disclosure contemplates processor 802 including any suitable number of any suitable internal caches, where appropriate. As an example and not by way of limitation, processor 802 may include one or more instruction caches, one or more data caches, and one or more translation lookaside buffers (TLBs). Instructions in the instruction caches may be copies of instructions in memory 804 or storage 806, and the instruction caches may speed up retrieval of those instructions by processor 802. Data in the data caches may be copies of data in memory 804 or storage 806 for instructions executing at processor 802 to operate on; the results of previous instructions executed at processor 802 for access by subsequent instructions executing at processor 802 or for writing to memory 804 or storage 806; or other suitable data. The data caches may speed up read or write operations by processor 802. The TLBs may speed up virtual-address translation for processor 802. In particular embodiments, processor 802 may include one or more internal registers for data, instructions, or addresses. This disclosure contemplates processor 802 including any suitable number of any suitable internal registers, where appropriate. Where appropriate, processor 802 may include one or more arithmetic logic units (ALUs); be a multicore processor; or include one or more processors 802. Although this disclosure describes and illustrates a particular processor, this disclosure contemplates any suitable processor.

In particular embodiments, memory 804 includes main memory for storing instructions for processor 802 to execute or data for processor 802 to operate on. As an example and not by way of limitation, computer system 800 may load instructions from storage 806 or another source (such as, for example, another computer system 800) to memory 804. Processor 802 may then load the instructions from memory 804 to an internal register or internal cache. To execute the instructions, processor 802 may retrieve the instructions from the internal register or internal cache and decode them. During or after execution of the instructions, processor 802 may write one or more results (which may be intermediate or final results) to the internal register or internal cache. Processor 802 may then write one or more of those results to memory 804. In particular embodiments, processor 802 executes only instructions in one or more internal registers or internal caches or in memory 804 (as opposed to storage 806 or elsewhere) and operates only on data in one or more internal registers or internal caches or in memory 804 (as opposed to storage 806 or elsewhere). One or more memory buses (which may each include an address bus and a data bus) may couple processor 802 to memory 804. Bus 812 may include one or more memory buses, as described below. In particular embodiments, one or more memory management units (MMUs) reside between processor 802 and memory 804 and facilitate accesses to memory 804 requested by processor 802. In particular embodiments, memory 804 includes random access memory (RAM). This RAM may be volatile memory, where appropriate Where appropriate, this RAM may be dynamic RAM (DRAM) or static RAM (SRAM). Moreover, where appropriate, this RAM may be single-ported or multi-ported RAM. This disclosure contemplates any suitable RAM. Memory 804 may include one or more memories 804, where appropriate. Although this disclosure describes and illustrates particular memory, this disclosure contemplates any suitable memory.

In particular embodiments, storage 806 includes mass storage for data or instructions. As an example and not by way of limitation, storage 806 may include a hard disk drive (HDD), a floppy disk drive, flash memory, an optical disc, a magneto-optical disc, magnetic tape, or a Universal Serial Bus (USB) drive or a combination of two or more of these. Storage 806 may include removable or non-removable (or fixed) media, where appropriate. Storage 806 may be internal or external to computer system 800, where appropriate. In particular embodiments, storage 806 is non-volatile, solid-state memory. In particular embodiments, storage 806 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 806 taking any suitable physical form. Storage 806 may include one or more storage control units facilitating communication between processor 802 and storage 806, where appropriate. Where appropriate, storage 806 may include one or more storages 806. Although this disclosure describes and illustrates particular storage, this disclosure contemplates any suitable storage.

In particular embodiments, I/O interface 808 includes hardware, software, or both, providing one or more interfaces for communication between computer system 800 and one or more I/O devices. Computer system 800 may include one or more of these I/O devices, where appropriate. One or more of these I/O devices may enable communication between a person and computer system 800. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 808 for them. Where appropriate, I/O interface 808 may include one or more device or software drivers enabling processor 802 to drive one or more of these I/O devices. I/O interface 808 may include one or more I/O interfaces 808, where appropriate. Although this disclosure describes and illustrates a particular I/O interface, this disclosure contemplates any suitable I/O interface.

In particular embodiments, communication interface 810 includes hardware, software, or both providing one or more interfaces for communication (such as, for example, packet-based communication) between computer system 800 and one or more other computer systems 800 or one or more networks. As an example and not by way of limitation, communication interface 810 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 810 for it. As an example and not by way of limitation, computer system 800 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 800 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 800 may include any suitable communication interface 810 for any of these networks, where appropriate. Communication interface 810 may include one or more communication interfaces 810, where appropriate. Although this disclosure describes and illustrates a particular communication interface, this disclosure contemplates any suitable communication interface.

In particular embodiments, bus 812 includes hardware, software, or both coupling components of computer system 800 to each other. As an example and not by way of limitation, bus 812 may include an Accelerated Graphics Port (AGP) or other graphics bus, an Enhanced Industry Standard Architecture (EISA) bus, a frontside bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 812 may include one or more buses 812, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

**Claims**

1. An aircraft comprising:

   a number of propellers $N_{prop}$, wherein:

      each propeller:

comprises a diameter $d_{prop}$;
has a propeller efficiency $\eta_{prop}$; and
is configured to absorb power $p_{prop}$ to
rotate at a rate $RPM$ to generate thrust
for a flight speed $V$ of the aircraft; and

a total power $p_{total}$ absorbed by the propellers is approximately $p_{prop} \times N_{prop}$;

a wing having a circulation distribution, wherein the wing comprises a wingspan $B$;
a drag $D$ that is approximately equal to $p_{total} \times \eta_{prop}/V$; and
for $V$ and $B$, the circulation distribution, $d_{prop}$, and $RPM$ substantially minimizes $D$.

2. The aircraft of Claim 1, wherein $p_{total}$ is less than 1450 watts.

3. The aircraft of Claim 1 or 2, wherein the aircraft, when in flight at an altitude above 40,000 feet, maintains a flight speed $V$ of 25 meters per second.

4. The aircraft of any of Claims 1 to 3, wherein the aircraft, when in flight at an altitude above 40,000 feet, follows a particular path pattern that is one of a circular path, an elliptical path, or a straight line path.

5. The aircraft of any of Claims 1 to 4, wherein the wingspan $B$ is between 30 and 60 meters.

6. The aircraft of any of Claims 1 to 5, wherein the horizontal wing as an aspect ratio of at least 10.

7. The aircraft of any of Claims 1 to 6, wherein the wing circulation distribution follows a parabolic curve.

8. The aircraft of any of Claims 1 to 7, wherein the horizontal wing produces, when the aircraft is in flight, a wing trailing vortex with a first induced velocity in a first direction; and
wherein at least some of the propellers, when generating thrust, produce a propeller wake vortex with a second induced velocity in a second direction, wherein the propeller wake vortex cancels out at least some of the wing trailing vortex.

9. The aircraft of any of Claims 1 to 8, wherein the propellers rotate at an RPM of at least 500.

10. The aircraft of any of Claims 1 to 9, wherein the propellers are affixed to the horizontal wing.

11. The aircraft of any of Claims 1 to 10, wherein $N_{prop}$ is 6.

12. The aircraft of any of Claims 1 to 11, wherein $d_{prop}$ is 1.5 meters.

13. The aircraft of any of Claims 1 to 12, wherein each propeller comprises a hub and each hub has a hub diameter $d_{hub}$, and wherein $d_{hub}/d_{prop} = 0.2$.

14. The aircraft of any of Claims 1 to 13, wherein thrust is evenly distributed among the propellers.

FIG. 1A

FIG. 1B

EP 3 388 336 A1

FIG. 2

*FIG. 3*

**FIG. 4**

NACA 2410 AIRFOIL PROFILE

x (%)

Z (%)

*FIG. 5A*

**FIG. 5B**

**FIG. 5C**

WING CIRCULATION DISTRIBUTIONS          (PARABOLIC)

*FIG. 6A*

EP 3 388 336 A1

FIG. 6B

WING SECTION PITCH ANGLE DISTRIBUTION
(D_PROP=1.5m; U=25m/s; B=60m)

WING SECTION PITCH ANGLE DISTRIBUTION
(D_PROP=1.0m; U=25m/s; B=60m)

*FIG. 7A*

WING SECTION CHORD LENGTH DISTRIBUTION
(D_PROP=1.5m; U=25m/s; B=60m)

WING SECTION CHORD LENGTH DISTRIBUTION
(D_PROP=1.0m; U=25m/s; B=60m)

**FIG. 7B**

EP 3 388 336 A1

WING SECTION CIRCULATION DISTRIBUTION
(D_PROP=1.5m; U=25m/s; B=60m)

WING SECTION CIRCULATION DISTRIBUTION
(D_PROP=1.0m; U=25m/s; B=60m)

**FIG. 7C**

INDUCED VELOCITY ALONG THE WING SPAN
(D_PROP=1.5m; U=25m/s; B=60m)

INDUCED VELOCITY ALONG THE WING SPAN
(D_PROP=1.0m; U=25m/s; B=60m)

**FIG. 7D**

EP 3 388 336 A1

PROPELLER BLADE PITCH ANGLE DISTRIBUTION
(D_PROP=1.5m; U=25m/s; B=60m)

PROPELLER BLADE PITCH ANGLE DISTRIBUTION
(D_PROP=1.0m; U=25m/s; B=60m)

*FIG. 7E*

COMPUTER SYSTEM — 800

812

PROCESSOR — 802

MEMORY — 804

STORAGE — 806

I/O INTERFACE — 808

COMMUNICATION INTERFACE — 810

*FIG. 8*

Europäisches
Patentamt
European
Patent Office
Office européen
des brevets

# EUROPEAN SEARCH REPORT

Application Number

EP 18 16 0186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/021206 A2 (JNCASR BANGALORE [IN]; NARASIMHA RODDAM [IN]; DESHPANDE SURESH MADHUSU) 24 February 2011 (2011-02-24)<br>* page 1, line 16 - page 2, line 12 *<br>* page 8, line 25 - page 9, line 8 *<br>* page 11, line 16 - page 14, line 5 *<br>* figures 1-10 * | 1,6,7,9, 10,12-14 | INV.<br>B64C23/06<br>B64C39/10<br><br>ADD.<br>B64C11/00 |
| X | FLITTIE K ET AL: "PATHFINDER SOLAR-POWERED AIRCRAFT FLIGHT PERFORMANCE",<br>AIAA PAPER, AMERICAN INSTITUTE OF AERONAUTICS AND ASTRONAUTICS, US,<br>no. 98-4446, 10 August 1998 (1998-08-10), pages 618-632, XP001014531,<br>ISSN: 0146-3705<br>* page 618 - page 630 *<br>* figures 1-6, 13 * | 1,2,4-6, 10,11,14 | |
| X | GB 2 536 014 A (STRATOSPHERIC PLATFORMS LTD) 7 September 2016 (2016-09-07)<br>* page 1, line 11 - line 16 *<br>* page 4, line 15 - page 6, line 17 *<br>* page 9, line 14 - line 24 *<br>* figures 1-9 * | 1,3,5,7, 10 | TECHNICAL FIELDS SEARCHED (IPC)<br><br>B64C |

-/--

The present search report has been drawn up for all claims

| Place of search | Date of completion of the search | Examiner |
|---|---|---|
| Munich | 23 April 2018 | Glück, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 16 0186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Leo Veldhuis: "Propeller Wing Aerodynamic Interference", 24TH INTERNATIONAL CONGRESS OF THE AERONAUTICAL SCIENCES, 24 October 2014 (2014-10-24), XP055466725, Retrieved from the Internet: URL:https://www.researchgate.net/profile/Leo_Veldhuis/publication/27341924_Propeller_Wing_Aerodynamic_Interference/links/544a184a0cf244fe9ea62bc4/Propeller-Wing-Aerodynamic-Interference.pdf?origin=publication_detail [retrieved on 2018-04-12] * abstract * * chapter 5.3 * * figures 1-29 * | 1,7,8,10 | |
| X | US 4 533 101 A (PATTERSON JR JAMES C [US]) 6 August 1985 (1985-08-06) * abstract * * figures 1-2 * | 1,8,10, 14 | |
| A | US 5 918 835 A (GERHARDT HEINZ ADOLF [US]) 6 July 1999 (1999-07-06) * abstract * * figures 1-3 * | 8 | |

TECHNICAL FIELDS SEARCHED (IPC)

The present search report has been drawn up for all claims

| Place of search | Date of completion of the search | Examiner |
|---|---|---|
| Munich | 23 April 2018 | Glück, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 18 16 0186

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2018

| Patent document cited in search report | | Publication date | Patent family member(s) | | Publication date |
|---|---|---|---|---|---|
| WO 2011021206 | A2 | 24-02-2011 | BR | PI1016070 A2 | 05-07-2016 |
| | | | CN | 102470931 A | 23-05-2012 |
| | | | EP | 2448819 A2 | 09-05-2012 |
| | | | JP | 5658248 B2 | 21-01-2015 |
| | | | JP | 2012532067 A | 13-12-2012 |
| | | | KR | 20120042916 A | 03-05-2012 |
| | | | US | 2012104183 A1 | 03-05-2012 |
| | | | WO | 2011021206 A2 | 24-02-2011 |
| GB 2536014 | A | 07-09-2016 | CN | 107567415 A | 09-01-2018 |
| | | | EP | 3265381 A1 | 10-01-2018 |
| | | | GB | 2536014 A | 07-09-2016 |
| | | | US | 2018053991 A1 | 22-02-2018 |
| | | | WO | 2016139465 A1 | 09-09-2016 |
| US 4533101 | A | 06-08-1985 | NONE | | |
| US 5918835 | A | 06-07-1999 | NONE | | |

EPO FORM P0459

For more details about this annex : see Official Journal of the European Patent Office, No. 12/82